(19) Europäisches Patentamt
European Patent Office
Office européen des brevets

(11) **EP 1 939 253 B1**

(12) **EUROPEAN PATENT SPECIFICATION**

(45) Date of publication and mention
of the grant of the patent:
**14.04.2010 Bulletin 2010/15**

(51) Int Cl.:
*C08L 67/04* (2006.01)    *C08K 7/02* (2006.01)

(21) Application number: **07024242.5**

(22) Date of filing: **13.12.2007**

(54) **Natural fiber-reinforced polylatic acid-based resin composition**

Natürliche faserverstärkte Harzzusammensetzung auf polylaktischer Säurebasis

Composition de résine naturelle à base d'acide polylactique renforcée par fibres

(84) Designated Contracting States:
**DE FR GB IT NL**

(30) Priority: **13.12.2006 KR 20060126722**

(43) Date of publication of application:
**02.07.2008 Bulletin 2008/27**

(73) Proprietor: **Cheil Industries Inc.**
**Gumi-si**
**Gyeongsangbuk-do 730-030 (KR)**

(72) Inventor: **Do Jung, Chang**
**Uiwang-si, Gyeonngi-do 437-711 (KR)**

(74) Representative: **Bublak, Wolfgang**
**European Patent Attorney**
**Bardehle, Pagenberg, Dost, Altenburg, Geissler**
**Postfach 86 06 20**
**81633 München (DE)**

(56) References cited:
**EP-A- 1 652 874**    **WO-A-2004/063282**
**US-A1- 2005 225 009**

• **NISHINO ET AL: "X-ray diffraction studies on stress transfer of kenaf reinforced poly(l-lactic acid) composite"** 17 November 2006 (2006-11-17), COMPOSITES PART A: APPLIED SCIENCE AND MANUFACTURING, ELSEVIER SCIENCE PUBLISHERS B.V., AMSTERDAM, NL, PAGE(S) 2269-2273 , XP005772310 ISSN: 1359-835X * the whole document * & DATABASE SCIENCEDIRECT Elsevier; 2006, T.NISHINO: "X-ray diffraction studies on ..." retrieved from SCIENCEDIRECT
• **DATABASE WPI** Week 200642 Derwent Publications Ltd., London, GB; AN 2006-406419 XP002471364 & JP 2006 117768 A (TORAY IND) 11 May 2006 (2006-05-11)
• **WONG S ET AL: "POLY(L-LACTIC ACID) COMPOSITES WITH FLAX FIBERS MODIFIED BY PLASTICIZER ABSORPTION"** POLYMER ENGINEERING & SCIENCE, WILEY, HOBOKEN, NJ, US, vol. 43, no. 9, September 2003 (2003-09), pages 1566-1575, XP001192617 ISSN: 0032-3888
• **DATABASE WPI** Week 200423 Derwent Publications Ltd., London, GB; AN 2004-242232 XP002471447 & JP 2003 313417 A (TOYOTA CHUO KENKYUSHO) 6 November 2003 (2003-11-06)

**Description**

The present invention relates to a natural fiber-reinforced polylactic acid-based resin composition.

Until recently, studies of polymer materials focused more on the development of rigid polymer materials and the stability of polymer materials. With increasing awareness and concerns regarding environmental pollution from polymer waste materials worldwide, there is an increasing demand for environmentally friendly polymer materials.

Environmentally compatible polymer materials are generally divided into two categories, namely, photodegradable polymer materials and biodegradable polymer materials. Biodegradable polymer materials have a functional group degradable by a microorganism in their main chain.

Among these, aliphatic polyester polymers are of primary of interest because of their excellent processibility and the ease of control of degradability. In particular, 150 thousand tons of polylactic acid (PLA) is available throughout the global market and can be used in fields such as food packages and containers, electronic equipment cases, and so on, in which conventional nondegradable plastic has been used. Until recently, the main application of PLA resin included disposable articles that relied upon the biodegradable property of PLA, for example food containers, wrap, film, and the like. Examples of PLA resins include PLA resin produced by Natureworks Corporation of U.S.A. and Toyota Corporation of Japan.

However, conventional PLA resins lack moldability and mechanical strength as well as heat resistance. Therefore, problems occur. For example, the film products are very fragile and the molded products may be deformed when the ambient temperature rises above 60°C due to low heat resistance.

Japanese Patent Publication Nos. 2005-220177, 2005-200517 and 2005-336220 disclose that polylactic acid based resins may have improved heat resistance and mechanical strength by introducing glass fibers thereto. However, glass fiber is not biodegradable.

Meanwhile, Japanese Patent Publication Nos. 2005-105245 and 2005-60556 disclose that kenaf may be added to a polylactic acid based resin to increase its environmentally friendly properties. However, these methods provide limited improvement in heat resistance and impact strength. Moreover, pyrolysis of lignin during molding can discolor the composition.

The present invention includes an environmentally-friendly biodegradable polylactic acid based resin composition. The polylactic acid based resin composition of the invention can exhibit good moldability, mechanical strength and heat resistance. The polylactic acid based resin composition of the invention can also exhibit improved surface gloss and color properties.

The polylactic acid based resin composition according to the present invention comprises: (A) about 50 to about 90 parts by weigh of a polylactic acid (PLA) resin, (B) about 10 to about 50 parts by weight of natural fibers and (C) about 0.01 to about 5 parts by weight of a coupling agent.

In exemplary embodiments of the invention, said PLA resin comprises about 95 to about 100% of L-lactic acid and about 0 to about 5% of D-lactic acid. The natural fibers may be bast fibers. The natural fibers may contain at least about 95% of cellulose.

In exemplary embodiments of the invention, the natural fibers may have an average diameter of about 0.1 to about 50 μm. The length of the natural fibers may be about 1 to about 100 mm.

In certain embodiments, the natural fibers are surface treated by plasma or alkali.

In exemplary embodiments, the coupling agent may be a silane coupling agent. The composition may further comprise additives selected from the group consisting of anti-oxidants, benzophenon- or amine-based weather resistant agents, releasing agents, colorants, UV blocking agents, fillers, nucleating agents, plasticizers, adhesion aids, adhesives and mixtures thereof.

Another aspect of the invention provides a pellet extruded from the foregoing resin composition.

Another aspect of the invention provides products molded from the resin composition. The polylactic acid based resin composition can be suitable for the production of numerous types of molded products, including vehicle parts, machine parts, electric or electronic parts, office machines and other general goods, and can be particularly useful for the production of molded products requiring heat resistance and mechanical strength.

The present invention now will be described more fully hereinafter in the following detailed description of the invention, in which some, but not all embodiments of the invention are described. Indeed, this invention may be embodied in many different forms and should not be construed as limited to the embodiments set forth herein; rather, these embodiments are provided so that this disclosure will satisfy applicable legal requirements.

The polylactic acid based resin composition according to the present invention comprises: (A) about 50 to about 90 parts by weigh of a polylactic acid (PLA) resin, (B) about 10 to about 50 parts by weight of natural fibers and (C) about 0.01 to about 5 parts by weight of a coupling agent. Each component of the composition will be discussed below in detail.

### (A) Polylactic acid resin

The polylactic acid (PLA) resin is a polyester resin typically made by an ester reaction of lactic acid monomer obtained by degradation of cornstarch, and is commercially available.

The PLA resin used as the base resin in the present invention comprises L-lactic acid and D-lactic acid, for example about 95% or more of L-lactic acid.

In exemplary embodiments of the present invention, the PLA resin comprises about 95 to about 100% of L-lactic acid and about 0 to about 5% of D-lactic acid.

The molecular weight or molecular weight distribution of the PLA is not particularly limited as long as the resin is moldable. In exemplary embodiments, the weight average molecular weight of the PLA is higher than about 80,000.

### (B) Natural fibers

The natural fibers are used as a reinforcing agent in the present invention. The natural fibers are bast fibers made from a flexible bast part rather than a woody part of a plant stem.

The bast fibers usable in the polymer composite of the present invention may include flax, hemp, jute, kenaf, ramie, curaua, and the like, and mixtures thereof.

Generally, cell walls of fiber cells are mainly composed of cellulose, lignin and semicellulose. When natural fibers in which lignin and semicellulose are insufficiently removed are used as natural fibers, thermal resistance and mechanical strength are not sufficiently improved. In addition, such natural fibers may discolor the molded product during the molding process due to pyrolysis of lignin.

Therefore, the natural fibers of the present invention comprise at least about 95% of cellulose, for example at least about 97% cellulose, to substantially minimize or eliminate the above-mentioned problems. If natural fibers containing less than 95% of cellulose are used, the mechanical property and heat resistance of the resin composition may be deteriorated and the molded product may be discolored.

The average length of the fibers can be about 1 to about 100 mm, for example about 3 to about 70 mm, depending on the desired mechanical strength and appearance of the resultant molded product. When the length of the fibers is less than about 1 mm, the resin composition may not provide the desired strength improvement. Fibers with a length more than about 100 mm, however, can cause problems during the molding process.

Further, the average diameter of the natural fibers can be about 0.1 to about 50 $\mu$m, for example about 1 to about 30 $\mu$m. When the diameter of the fibers exceeds about 50 $\mu$m, the natural fibers may be visible on the surface of the molded product and surface gloss may be degraded.

In exemplary embodiments of the invention, the natural fibers may be surface treated using various techniques such as plasma treatment, alkali treatment and so forth in order to improve a wetting property between natural fibers and PLA.

The natural fibers may be used in an amount of about 10 to about 50 parts by weight to improve mechanical strength and heat resistance. An amount of natural fibers of less than about 10 parts by weight may not substantially improve mechanical strength. Meanwhile, when the content is higher than about 50 parts by weight, it can be difficult or even impossible to mold the composition.

### (C) Coupling Agent

A reactant or a non-reactant coupling agent, such as a silane coupling agent, may be used as the coupling agent of the present invention.

Generally, a silane coupling agent forms an oxane bond (M-O-Si, wherein, M=Si, Ti, Al, Fe, etc.) on a surface of a mineral.

In the present invention, the silane coupling agent is added and mixed with the PLA resin along with the natural fibers, to improve the compatibility between the PLA resin and the natural fibers, and thereby also improve the mechanical strength of the composition. In contrast, poor mechanical strength is a common defect for conventional PLA based resins.

In an exemplary embodiment, the silane coupling agent may be represented by the following formula:

$$(RO\text{-})_n M\text{-}(\text{-}O\ X\ R'Y)_{4-n}$$

or

$$(RO\text{-})_3 Si\text{-}(\text{-}R'\ Y),$$

wherein, R and R' are an aliphatic or aromatic thermoplastic functional group, M is tetravalent titanium or zirconium, X is a bonding functional group such as phosphato-, pyrophosphato-, sulfonyl-, carboxyl group and the like, Y is a thermosetting functional group such as epoxy-, acryl-, methacryl-, NCO group and the like, and n is in the range of about 1 to 3.

In exemplary embodiments of the invention, a silane coupling agent having a terminal epoxy group may be used. Examples of the silane coupling agent may include, but are not limited thereto, 3-glycidoxypropyl trimethoxy silane, 3-glycidoxy propylmethyl dimethoxysilane, 2-(3,4-epoxycyclohexyl) ethyltrimethoxysilane, 3-methacryloxy propyl trimethoxy silane and the like. The coupling agent may be used alone or in combination of two or more.

The coupling agent may be used in an amount of about 0.01 to about 5 parts by weight, for example about 0.1 to about 3 parts by weight, based on 100 parts by weight of (A) + (B). If the amount is less than about 0.01 parts by weight, it is difficult to improve mechanical strength. When the amount exceeds about 5 parts by weight, the viscosity in the melt extruder significantly rises, which can negatively affect molding performance.

Other additives may be contained in the resin composition of the present invention. The additives may include phenol type antioxidants, phosphide type antioxidants, thioether type antioxidants or amine type antioxidants, benzophenone type weather resistant agents or amine type weather resistant agents, releasing agents, colorants, UV blocking agent, fillers, nucleating agent, plasticizers, adhesion aids, adhesives and mixtures thereof.

Fluoro-containing polymers, silicon oil, metal salts of stearic acid, metal salts of montanic acid, montanic acid ester wax or polyethylene wax may be used as a releasing agent. Dyes or pigments may be used as a coloring agent.

Titanium dioxide or carbon black may be used as a UV blocking agent. Silica, clay, calcium carbonate, calcium sulfate or glass beads may be used as a filler. Talc or clay may be used as a nucleating agent.

The PLA based resin composition obtained by the present invention can be used for the production of molded products which need heat resistance and mechanical strength, for example vehicles, machine parts, electric/electronic parts, office equipment such as computers and other goods. The PLA based resin composition can be particularly useful for the production of housings for electric/electronic equipment such as televisions, computers, printers, washing machines, cassette players, audio systems, and cellular phones.

The present invention will be discussed in detail in the following examples, and the following examples are to illustrate, but not to limit the scope of the appended claims.

**Examples**

(A) polylactic acid (PLA) resin

PLA resin 2002D manufactured by Nature Works LLC of USA is used.

(B) Natural fibers

The natural fibers made from hemp, having 5 mm of average length and having following average cellulose content, average diameter and surface treatment condition are used:

NF-1: natural fibers with average cellulose content of 98% and average diameter of 10 $\mu$m (no surface treatment)
NF-2: natural fibers with average cellulose content of 98% and average diameter of 10 $\mu$m (alkali surface treatment)
NF-3: natural fibers with average cellulose content of 75% and average diameter of 100 $\mu$m (no surface treatment)

(C) Coupling agent

3-glycidoxypropyl trimethoxy silane (product name: S510) manufactured by Kenrich petrochemicals company is used.

**Example 1**

90 parts by weight of the basic PLA resin, 10 parts by weight of natural fiber component (NF-1) and 0.2 parts by weight of coupling agent are mixed and the mixture is extruded at 180 to 240°C with a conventional twin-screw extruder in pellets. The resin pellets are dried at 80°C for 4 hours, and molded into ASTM dumbbell test specimens using a 6 oz injection molding machine at a cylinder temperature of 190°C and a mold temperature of 80°C with a molding cycle of 120 seconds. The results are shown in Table 1.

TEST

(1) Heat distortion temperature (HDT): The heat distortion temperature is measured in accordance with ASTM D 648.
(2) Mechanical properties: Tensile strength is measured in accordance with ASTM D 638, and flexural strength and flexural modulus are determined in accordance with ASTM D 790.
(3) Color: The surface color after molding is evaluated by measuring ∆E value as follows with a Chroma Meter CR-200 by Minolta.

$$\triangle E = \sqrt{(\triangle L^2 + \triangle a^2 + \triangle b^2)}$$

wherein ∆L: change of brightness, ∆a: change of red color and ∆b: change of yellow color.
(4) Melt extrusion processibility: The melt extrusion processibility using an extruder is determined.

(O: melt extrusion is possible, X: melt extrusion is impossible.)

**Example 2**

Example 2 is prepared in the same manner as in Example 1 except that the amounts of PLA resin and natural fibers are changed in accordance with Table 1 below.

**Example 3**

Example 3 is prepared in the same manner as in Example 1 except that the amounts of PLA resin and natural fibers are changed in accordance with Table 1 below.

**Example 4**

Example 4 is prepared in the same manner as in Example 1 except that the natural fibers are changed to NF-2 and the amounts of PLA resin and natural fibers are changed in accordance with Table 1 below.

**Table 1**

| | | | Examples | | | |
|---|---|---|---|---|---|---|
| | | | 1 | 2 | 3 | 4 |
| (A) PLA resin | | parts by weight | 90 | 80 | 70 | 80 |
| (B) Hemp fibers | NF-1 | parts by weight | 10 | 20 | 30 | 0 |
| | NF-2 | parts by weight | 0 | 0 | 0 | 20 |
| (C) Coupling agent | | parts by weight | 0.2 | 0.2 | 0.2 | 0.2 |
| HDT | | °C | 65 | 76 | 102 | 83 |
| Tensile strength | | kgf/cm$^2$ | 770 | 1130 | 1370 | 1290 |
| Flexural strength | | kgf/cm$^2$ | 1260 | 1580 | 1930 | 1640 |
| Flexural modulus | | kgf/cm$^2$ | 56720 | 75250 | 98200 | 78500 |
| Color (∆E) | | | 2.4 | 2.7 | 3.2 | 2.6 |
| melt extrusion processibility | | | O | O | O | O |

**Comparative Example 1**

Comparative Example 1 is prepared in the same manner as in Example 1 except that the natural fibers are not used and the amount of PLA resin is changed in accordance with Table 2 below.

**Comparative Example 2**

Comparative Example 2 is prepared in the same manner as in Example 1 except that the coupling agents are not used in accordance with Table 2 below.

**Comparative Example 3**

Comparative Example 3 is prepared in the same manner as in Example 1 except that the natural fibers are changed to NF-3 and the amounts of PLA resin and natural fibers are changed in accordance with Table 2 below.

**Comparative Example 4**

Comparative Example 4 is prepared in the same manner as in Example 1 except that the amounts of PLA resin and natural fibers are changed in accordance with Table 2 below.

**Table 2**

| | | | Comparative Examples | | | |
|---|---|---|---|---|---|---|
| | | | 1 | 2 | 3 | 4 |
| (A) PLA resin | | parts by weight | 100 | 90 | 80 | 40 |
| (B) Hemp fibers | NF-1 | parts by weight | 0 | 10 | 0 | 60 |
| | NF-3 | parts by weight | 0 | 0 | 20 | 0 |
| (C) Coupling agent | | parts by weight | 0.2 | 0 | 0.2 | 0.2 |
| HDT | | °C | 55 | 55 | 61 | - |
| Tensile strength | | kgf/cm$^2$ | 440 | 470 | 1080 | - |
| Flexural strength | | kgf/cm$^2$ | 620 | 700 | 1330 | - |
| Flexural modulus | | kgf/cm$^2$ | 24740 | 29520 | 52540 | - |
| Color ($\Delta$E) | | | 1.7 | 1.9 | 6.8 | - |
| Extruder melt-mixed processibility | | | O | O | O | X |

As shown in Table 1, the heat resistance and the mechanical strength such as tensile strength, flexural strength and flexural modulus are all improved in the Examples 1 to 4. On the other hand, it is found that the mechanical strength such as tensile strength and so on in Comparative Example 1 in which natural fibers are not used is apparently decreased and HDT is also decreased. In Comparative Example 2 in which the coupling agent is not used, the mechanical strength and HDT are decreased, and in Comparative Example 3 using natural fibers having an average diameter above 50 $\mu$m and average content of cellulose less than 95% (NF-3), HDT and the mechanical strength is lower than those of example 4, and also there is a problem of large variation of color when molding.

The results above illustrate that using natural fibers or a coupling agent can improve mechanical strength. HDT and coupling agent or surface treatment of natural fibers can enhance compatibility with PLA resin. The results also illustrate that changing the content of cellulose or the average diameter of the fibers can influence mechanical properties and color of the molded products.

Many modifications and other embodiments of the invention will come to mind to one skilled in the art to which this invention pertains having the benefit of the teachings presented in the foregoing descriptions. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation, the scope of the invention being defined in the claims.

**Claims**

1.  A polylactic acid (PLA) based resin composition comprising:

    (A) 50 to 90 parts by weight of a polylactic acid resin;
    (B) 10 to 50 parts by weight of bast fibers comprising at least 95 % cellulose; and
    (C) 0.01 to 5 parts by weight of a coupling agent.

2. The PLA resin composition of claim 1, wherein said PLA resin comprises 95 to 100% of L-lactic acid and 0 to 5% of D-lactic acid.

3. The PLA resin composition of claim 1 or 2, wherein said bast fibers have an average diameter of 0.1 to 50 $\mu$m.

4. The PLA resin composition of claim 1 or 2, wherein said bast fibers have a length of 1 to 100 mm.

5. The PLA resin composition of claim 1 or 2, wherein said bast fibers are surface treated by plasma or alkali.

6. The PLA resin composition of any of claims 1 to 5, wherein said coupling agent is a silane coupling agent.

7. The PLA resin composition of any of claims 1 to 6, wherein said composition further comprises at least one additive selected from the group consisting of anti-oxidants, benzophenon type or amine type weather resistant agents, releasing agents, colorants, UV blocking agents, fillers, nucleating agents, plasticizers, adhesion aids, adhesives and mixtures thereof.

8. A pellet comprising a polylactic acid (PLA) based resin composition comprising (A) 50 to 90 parts by weight of a polylactic acid resin; (B) 10 to 50 parts by weight of bast fibers comprising at least 95 % cellulose; and (C) 0.01 to 5 parts by weight of a coupling agent.

9. The pellet of claim 8, wherein said bast fibers have an average diameter of 0.1 to 50 $\mu$m.

10. The pellet of claim 8, wherein said bast fibers are surface treated by plasma or alkali.

11. A molded product comprising a polylactic acid (PLA) based resin composition comprising (A) 50 to 90 parts by weight of a polylactic acid resin; (B) 10 to 50 parts by weight of bast fibers comprising at least 95 % cellulose; and (C) 0.01 to 5 parts by weight of a coupling agent.

12. The molded product of claim 11, wherein said bast fibers have an average diameter of 0.1 to 50 $\mu$m.

13. The molded product of claim 11, wherein said bast fibers are surface treated by plasma or alkali.

14. The molded product of claim 11, wherein said molded product is a molded electric or electronic part.

15. A molded product comprising a polylactic acid (PLA) based resin composition comprising a polylactic acid resin; bast fibers comprising at least 95 % cellulose; and a coupling agent, wherein said molded product has a heat distortion temperature (HDT) as measured in accordance with ASTM D 648 of 65°C or higher; a tensile strength as measured in accordance with ASTM D 638 of 770 kgf/cm$^2$ or higher; and a surface color $\Delta$E after molding of 3.2 or less.

**Patentansprüche**

1. Harzzusammensetzung auf Polylactid-Basis (PLA), umfassend:

    (A) 50 bis 90 Gewichtsteile eines Polylactidharzes;
    (B) 10 bis 50 Gewichtsteile Bastfasern, umfassend mindestens 95% Cellulose; und
    (C) 0,01 bis 5 Gewichtsteile eines Kupplungsmittels.

2. PLA-Harzzusammensetzung nach Anspruch 1, wobei die PLA-Harzzusammensetzung 95 bis 100% L-Milchsäure und 0 bis 5% D-Milchsäure umfasst.

3. PLA-Harzzusammensetzung nach Anspruch 1 oder 2, wobei die Bastfasern einen mittleren Durchmesser von 0,1 bis 50 $\mu$m aufweisen.

4. PLA-Harzzusammensetzung nach Anspruch 1 oder 2, wobei die Bastfasern eine Länge von 1 bis 100 mm aufweisen.

5. PLA-Harzzusammensetzung nach Anspruch 1 oder 2, wobei die Bastfasern durch Plasma oder Alkali oberflächenbehandelt sind.

**6.** PLA-Harzzusammensetzung nach einem der Ansprüche 1 bis 5, wobei es sich bei dem Kupplungsmittel um ein Silankupplungsmittel handelt.

**7.** PLA-Harzzusammensetzung nach einem der Ansprüche 1 bis 6, wobei die Zusammensetzung des Weiteren mindestens einen Zusatz, ausgewählt aus der Gruppe, bestehend aus Antioxidationsmitteln, Wetterfestigkeitsmitteln vom Benzophenontyp oder Amintyp, Trennmitteln, Farbmitteln, UV-Blockern, Füllstoffen, Keimbildnern, Weichmachern, Klebehilfen, Klebstoffen und Gemischen davon, umfasst.

**8.** Pellet, umfassend eine Harzzusammensetzung auf der Basis von Polylactid (PLA), umfassend (A) 50 bis 90 Gewichtsteile eines Polylactidharzes; (B) 10 bis 50 Gewichtsteile Bastfasern, umfassend mindestens 95% Cellulose; und (C) 0,01 bis 5 Gewichtsteile eines Kupplungsmittels.

**9.** Pellet nach Anspruch 8, wobei die Bastfasern einen mittleren Durchmesser von 0,1 bis 50 $\mu$m aufweisen.

**10.** Pellet nach Anspruch 8, wobei die Bastfasern durch Plasma oder Alkali oberflächenbehandelt sind.

**11.** Formprodukt, umfassend eine Harzzusammensetzung auf der Basis von Polylactid (PLA), umfassend (A) 50 bis 90 Gewichtsteile eines Polylactidharzes; (B) 10 bis 50 Gewichtsteile Bastfasern, umfassend mindestens 95% Cellulose; und (C) 0,01 bis 5 Gewichtsteile eines Kupplungsmittels.

**12.** Formprodukt nach Anspruch 11, wobei die Bastfasern einen mittleren Durchmesser von 0,1 bis 50 $\mu$m aufweisen.

**13.** Formprodukt nach Anspruch 11, wobei die Bastfasern durch Plasma oder Alkali oberflächenbehandelt sind.

**14.** Formprodukt nach Anspruch 11, wobei es sich bei dem Formprodukt um ein elektrisches oder elektronisches Formteil handelt.

**15.** Formprodukt, umfassend eine Harzzusammensetzung auf der Basis von Polylactid (PLA), umfassend ein Polylactidharz; Bastfasern, umfassend mindestens 95% Cellulose; und ein Kupplungsmittel, wobei das Formprodukt eine wie gemäß ASTM D 648 gemessene Wärmeverformungstemperatur (heat distortion temperature; HDT) von 65°C oder höher; eine wie gemäß ASTM D 638 gemessene Zugfestigkeit von 770 kgf/cm$^3$ oder höher und eine Oberflächenfarbe $\Delta$E nach dem Formen von 3,2 oder weniger aufweist.

**Revendications**

**1.** Une composition de résine à base d'acide polylactique (PLA), comprenant :

(A) 50 à 90 parties en poids d'une résine d'acide polylactique ;
(B) 10 à 50 parties en poids de fibres de liber comprenant au moins 95 % de cellulose ; et
(C) 0,01 à 5 parties en poids d'un agent de couplage.

**2.** La composition de résine PLA de la revendication 1, dans laquelle ladite résine PLA comprend 95 à 100 % d'acide L-lactique et 0 à 5 % d'acide B-lactique.

**3.** La composition de résine PLA de la revendication 1 ou 2, dans laquelle lesdites fibres de liber ont un diamètre moyen de 0,1 à 50 $\mu$m.

**4.** La composition de résine PLA de la revendication 1 ou 2, dans laquelle lesdites fibres de liber ont une longueur de 1 à 100 mm.

**5.** La composition de résine PLA de la revendication 1 ou 2, dans laquelle lesdites fibres de liber sont traitées en surface par plasma ou par un alcali.

**6.** La composition de résine PLA de l'une des revendications 1 à 5, dans laquelle ledit agent de couplage est un agent de couplage silane.

**7.** La composition de résine PLA de l'une des revendications 1 à 6, dans laquelle ladite composition comprend en outre au moins un adhésif choisi dans le groupe formé par les antioxydants, les agents résistant aux intempéries du type amine ou benzophénone, les agents de libération, les colorants, les agents de blocage des UV, les charges, les agents de nucléation, les plastifiants, les aides à l'adhésion, les adhésifs et les mélanges de ceux-ci.

8. Une pastille comprenant une composition de résine à base d'acide polylactique (PLA), comprenant (A) 50 à 90 parties en poids d'une résine d'acide polylactique ; (B) 10 à 50 parties en poids de fibres de liber comprenant au moins 95 % de cellulose ; et (C) 0,01 à 5 parties en poids d'un agent de couplage.

9. La pastille de la revendication 8, dans laquelle lesdites fibres de liber ont un diamètre moyen de 0,1 à 50 $\mu$m.

10. La pastille de la revendication 8, dans laquelle lesdites fibres de liber ont une longueur de 1 à 100 mm.

11. Un produit moulé comprenant une composition de résine à base d'acide polylactique (PLA), comprenant (A) 50 à 90 parties en poids d'une résine d'acide polylactique ; (B) 10 à 50 parties en poids de fibres de liber comprenant au moins 95 % de cellulose ; et (C) 0,01 à 5 parties en poids d'un agent de couplage.

12. Le produit moulé de la revendication 11, dans lequel lesdites fibres de liber ont un diamètre moyen de 0,1 à 50 $\mu$m.

13. La produit moulé de la revendication 11, dans laquelle lesdites fibres de liber sont traitées en surface par plasma ou par un alcali.

14. Le produit moulé de la revendication 11, dans lequel ledit produit moulé est une pièce moulée électrique ou électronique.

15. Un produit moulé comprenant une composition de résine à base d'acide polylactique (PLA), comprenant une résine d'acide polylactique ; des fibres de liber comprenant au moins 95 % de cellulose ; et un agent de couplage, dans lequel ledit produit moulé présente une température de déformation thermique (HDT) telle que mesurée conformément à ASTM D 648 de 65°C ou plus ; une rigidité à la traction telle que mesurée selon ASTM D638 de 670 kgf/cm$^2$ ou plus ; et une couleur de surface $\Delta$E après moulage de 3,2 ou moins.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005220177 A
- JP 2005200517 A
- JP 2005336220 A
- JP 2005105245 A
- JP 2005060556 A